# EUROPEAN PATENT APPLICATION

(11) **EP 3 287 710 A1**
(43) Date of publication of application: **28.02.2018**
(21) Application number: 16185719.8
(22) Date of filing: 25.08.2016
(51) Int. Cl.: F24H 3/04, B29C 65/68, B60H 1/00, H01R 4/72, H05B 3/40

(54) **ELECTRIC HEATER**

(71) Applicant: Mahle International GmbH, 70376 Stuttgart (DE)
(72) Inventor: Marlier, Eric, 67120 Kolbsheim (FR)
(74) Representative: Grauel, Andreas

(57) **Abstract**

The invention relates to a electric heater (1), in particular for a heating or an air-conditioning system of a motor vehicle, comprising a heater core (2) having a plurality of heating units (3), said heating units (3) having a casing body (4) and at least one electric heating element arranged therein, wherein the casing body (4) comprises an open first end (5) and an open or closed second end (6) opposite the first end (5), wherein at least one electric connection element (7, 8), particularly for electrically contacting the at least one heating element, is arranged at the first end (5) and/or the second end (6) of the casing body (4), wherein the first end (5) comprises a first closure (9) for fluid-tightly closing the first end (5) and/or the second end (6) comprises a second closure (10) for fluid-tightly closing the second end (6), wherein the first closure (9) and/or the second closure (10) is/are made of a heat-shrinkable plastic material.

## Description

### Field of the invention

The invention relates to an electric heater, in particular for a heating or an air-conditioning system of a motor vehicle, comprising a heater core having a plurality of heating units, said heating units having a casing body and at least one electric heating element arranged therein, wherein the casing body comprises an open first end and an open or closed second end opposite to the first end, wherein at least one electric connection element, particularly for electrically contacting the at least one heating element, is arranged at the first end and/or the second end of the casing body, wherein the first end comprises a first closure for fluid-tightly closing the first end and/or the second end comprises a second closure for fluid-tightly closing the second end.

### Description of the background of the invention

Electric heaters are well known in the art especially for the use in a heating or an air-conditioning system of a motor vehicle. The electric heater is used for example to heat up an air flow generated by a fan of the heating or the air-conditioning system. Such an electric heater often comprises a plurality of heating units which respectively contain at least one electric heating element. The heating units are located in a frame together with heat dissipating fins and electric contact elements of the electric heating elements. The heating unit often further comprises a casing body which contains at least one electric heating element, for example a PTC element. If both ends of the casing body are made in an open design, they have to be sealed in a fluid-tight manner after the electric heating element has been inserted into the casing body. Alternatively the second end of the casing body can be made in a closed design and the first end of the casing body is sealed after inserting the electric heating element.

However, the friction coefficient between the frame material and the sealing material is important to note, in order to gain a durably fluid-tight sealing and an efficient assembling process for the electric heater. Some materials, for example silicone, may comprise beneficial properties regarding fluid-tightness and the friction coefficient but can only be used in a restricted manner due to legal regulations. The use of many other sealing materials, such as grease, leads to an unfavourable high complexity of the assembling process and thereby increases the manufacturing costs.

### Object of the invention, solution, advantages

Therefore it is the object of the invention to provide a durable electric heater which can easily be assembled.

The object is achieved by the features of claim 1.

According to an embodiment an electric heater is provided, in particular for a heating or an air-conditioning system of a motor vehicle, comprising a heater core having a plurality of heating units, said heating units having a casing body and at least one heating element arranged therein, wherein the casing body comprises an open first end and an open or closed second end opposite the first end, wherein at least one electric connection element, particularly for electrically contacting the at least one heating element, is arranged at the first end and/or the second end of the casing body, wherein the first end comprises a first closure for fluid-tightly closing the first end and/or the second end comprises a second closure for fluid-tightly closing the second end, wherein the first closure and/or the second closure is/are made of a heat-shrinkable plastic material. Therefore it is possible to create a simply applicable and durable sealing for both ends of the casing body. Additionally the closure or the closures are made such that the electric connection element extends or the electric connection elements extend through the at least one closure. Therefore a fluid-tight closure is realized.

According to an advantageous embodiment of the invention, the first closure comprises a substantially cap-shaped first base body having a first rim and/or the second closure comprises a substantially cap-shaped second base body having a second rim, wherein the first rim encompasses the first end of the casing body and the second rim encompasses the second end of the casing body. Therefore both ends of the casing body can easily be sealed.

In an advantageous embodiment, the first base body of the first closure comprises a first inner surface and the second base body of the second closure comprises a second inner surface, wherein at least one portion of the first inner surface fluid-tightly bears against the first end of the casing body and/or at least one portion of the second inner surface fluid-tightly bears against the second end of the casing body.

In a further embodiment, a first electric connection element and a second electric connection element project through the first closure or the first electric connection element projects through the first closure and the second electric connection element projects through the second closure.

It is preferable, if the first base body of the first closure comprises at least one through-opening opposite the first rim, wherein the at least one electric connection element projects through the at least one through-opening.

Additionally the first base body of the first closure can comprise a first through-opening and a second through-opening, wherein the first electric connection element projects through the first through-opening and the second electric connection element projects through the second through-opening.

Furthermore it is preferable that the base body (14) of the first closure (9) comprises a first through-opening (21, 22) opposite the first rim (16) and the base body of the second closure (10) comprises a second through-opening opposite the second rim, wherein the first electric connection element (7) projects through the first through-opening (21) and the second electric connection element (8) projects through the second through-opening (22).

Furthermore it is preferable that the second closure comprises no through-opening.

Furthermore it is preferable, that the first through-opening comprises a first collar pointing away from the casing body and the second through-opening comprises a second collar pointing away from the casing body, wherein the first electric connection element projects through the first collar and the second electric connection element projects through the second collar.

In another embodiment it is favorable that the first collar comprises a first inner surface and the second collar comprises a second inner surface, wherein at least one portion of the first inner surface bears fluid-tightly against the first electric connection element and at least one portion of the second inner surface bears fluid-tightly against the second electric connection element.

In another embodiment it is favorable, that at least one of the heating elements comprises PTC-elements.

Furthermore it is advantageous, that a plurality of heat dissipating fins is arranged between the casing bodies, wherein the heat dissipating fins form interstices that can be flowed through in an air flow direction F.

According to a further aspect of the invention, the casing bodies respectively comprise a longitudinal axis A extending between the first end and the second end of the casing body, wherein the casing bodies form at least one row running perpendicular to the longitudinal axes A and the air flow direction F.

In another embodiment of the invention, the first closures of adjacent casing bodies are connected to each other and form a first closure strip and/or the second closures of adjacent casing bodies are connected to each other and form a second closure strip.

In a further advantageous embodiment, the first end of the casing body is friction fit in the first closure by heating the first closure and/or the second end of the casing body is friction fit in the second closure by heating the second closure.

Further preferable embodiments of the invention are described in the claims and the following description of the drawings.

### Description of the drawings

The invention is explained in detail below by means of an exemplary embodiment and with reference to the drawings, in which:
- Fig. 1: shows a first embodiment of an inventive electric heater,
- Fig. 2: shows a heating unit of an electric heater according to figure 1,
- Fig. 3: shows in detail a member of the heating unit according to figure 2, and
- Fig. 4: shows a detail of another member of the heating unit according to figure 2.

### Preferred embodiments of the invention

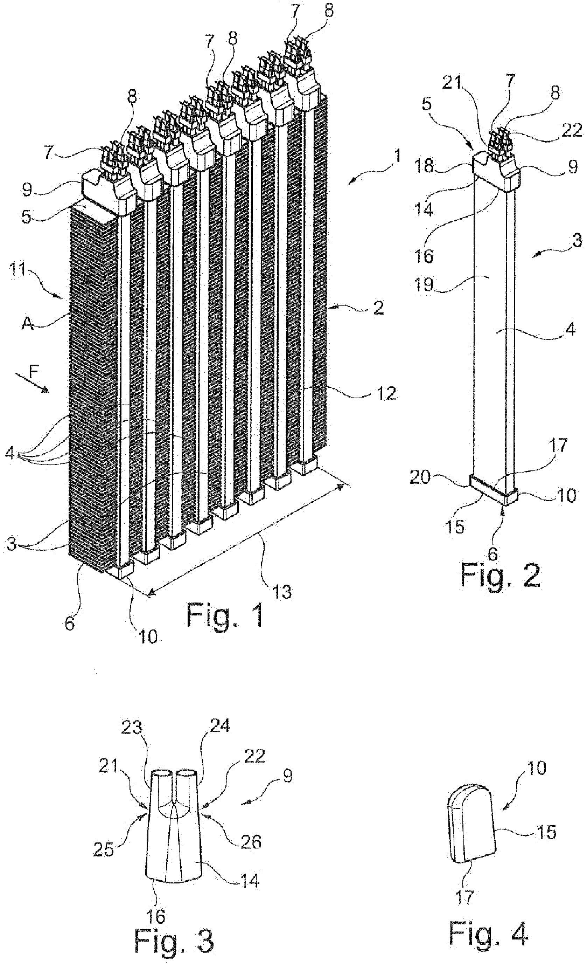

Fig. 1 shows an isometric illustration of an electric heater 1, according to an embodiment of the present invention. The inventive electric heater 1 might be for example utilised in a heating or an air-conditioning system of a motor vehicle. In this case the electric heater 1 heats up air, which passes the heat transfer surface of the electric heater 1 in order to supply warm air into the passenger compartment of the motor vehicle.

For this purpose the heating or the air-conditioning system usually comprises a housing which is not illustrated in Fig. 1. The housing comprises air ducts that are formed by walls of the housing. A blower is used to generate an air flow, wherein the air is sucked from the environment or/and out of the passenger compartment of the motor vehicle and blown through the housing such that the air of the air flow will subsequently be heated up by the electric heater 1. In the air flow direction after the electric heater 1 the air is directed through ducts and leaves the housing at ejector means to the passenger compartment of the motor vehicle.

The electric heater 1 shown in Fig. 1 is arranged in the main air duct of the housing of the heating or the air-conditioning system. Structurally, the electric heater 1 comprises a heater core 2. The heater core 2 features a plurality of heating units 3. The number and size of the heating units 3 can vary in different embodiments.

Each heating unit 3 comprises an elongated casing body 4 featuring two broadsides that are arranged parallel to each other and two narrow sides that are also arranged parallel to each other. The narrow sides thereby connect the broadsides to form the casing body 4. The casing body 4 further comprises a first end 5 and a second end 6 opposite the first end 5. The casing body 4 can be made out of only one element or can consist of several elements, which can be connected with each other to form the casing body 4. In an advantageous embodiment the casing body 4 is made out of a material, which has a good thermal conductivity.

The first end 5 of the casing body 4 is manufactured as an open end and closed by a first closure 9, which is comprised at the first end 5. The second end 6 of the casing body 4 is manufactured as an open end and closed by a second closure 10. In alternative embodiments the second end 6 can be manufactured as a closed end what obviates the second closure 10.

Inside of the casing body 4 is an electric heating element, which is not shown in Fig. 1, which is arranged between two insulating elements, which are not shown in Fig. 1. The electric heating element is connected to a positive pole and a negative pole of a power source. The power source is not shown in Fig. 1. The electric heating element and the insulating elements can for example be press-fitted together. In other preferred embodiments further fixation means, such as glue, can be used to connect the electric heating element to the insulating elements. The insulating elements can be arranged within the casing body 4 in a way that an air gap is created between the insulating elements and an inner wall of the casing body 4. Advantageously these air gaps are situated between the narrow sides of the casing body 4 and the insulating elements, whereas the broadsides of the casing body 4 are press-fitted to the insulating elements.

The electric heating elements can for example comprise PTC-elements (PTC = Positive Temperature Coefficient). PTC-elements, for example generated from electrically conductive ceramic materials, are current-conducting and conduct electric current better at low temperatures than at high temperatures. The reason here fore is, that their electrical resistance increases with rising temperature. Therefore the conducted current strength and thus the heating power produced become lower with rising temperature. Thus, the heating elements can be used to generate heat by applying an electric current to them. The electric current is obtained from the power supply mentioned above.

The heating elements are connected to a circuit board, which is not shown in Fig. 1, by at least one electric connection element 7, 8. The embodiment shown in Fig. 1 comprises two electric connection elements 7, 8 per casing body 4, a first electric connection element 7 and a second electric connection element 8. In alternative embodiments the electric connection elements 7, 8 may be featured at other positions at the heating unit 3.

The narrow sides of the casing body 4 feature a plurality of heat dissipating fins, which are not shown in Fig. 1. The heat dissipating fins form interstices that can be flowed through by the air flow in an air flow direction F. Thereby the heat dissipating fins enhance the heat transfer from the outer surface of the casing bodies 4 to the air. In the embodiment illustrated in Fig 1, the air flows against an air inlet surface 11 of the heater core 2 substantially in the air flow direction F. The air then flows through the heater core 2 and subsequently flows off from an air outlet surface 12 of the heater core 2 opposite the air inlet surface 11.

Each casing body 4 comprises a longitudinal axis A extending between the first end 5 of the elongated casing body 4 and the second end 6 of the casing body 4. The casing bodies 4 comprised by the electric heater 1 are arranged in one row 13 running perpendicular to the air flow direction F and perpendicular to the longitudinal axis A of the casing bodies 4.

The first closure 9 and the second closure 10 are made of a heat-shrinkable plastic material. The first closure 9 closes the first end 5 of the casing body 4 in a fluid-tight manner. The second closure 10 closes the second end 6 of the casing body 4 in a fluid-tight manner.

Fig. 2 shows a heating unit 3 according to Fig. 1. The first closure 9 is made of a heat-shrinkable plastic material and comprises a substantially cap-shaped first base body 14. The second closure 10 is made of a heat-shrinkable plastic material and comprises a substantially cap-shaped second base body 15. After the electric heating element has been inserted into the casing body 4 during manufacturing of the electric heater, the heat-shrinkable plastic material used for making the first closure 9 and the second closure 10 is molded around the first end 5 and the second end 6 of the casing body 4. The heat-shrinkable plastic material is subsequently subjected to a heat treatment. During this heat treatment the heat-shrinkable plastic material shrinks and forms a fluid-tight sealing around the first end 5 and the second end 6 of the casing body 4. Thereby a first rim 16 of the first closure 9 encompasses the first end 5 of the casing body 4 in a fluid-tight manner and a second rim 17 of the second closure 10 encompasses the second end 6 of the casing body 4 in a fluid-tight manner.

The substantially cap-shaped first base body 14 of the first closure 9 comprises a first side wall 18 having an outer surface and an inner surface. The inner surface of the first side wall 18 of the first closure 9 bears fluid-tightly against the outer wall 19 of the casing body 4 within the region of the first end 5 of the casing body 4. The substantially cap-shaped second base body 15 of the second closure 10 comprises a second side wall 20 having an outer surface and an inner surface. The inner surface of the second side wall 20 of the second closure 10 bears fluid-tightly against the outer wall 19 of the casing body 4 within the region of the second end 6 of the casing body 4.

The first closure 9 comprises a first through-opening 21 and a second through-opening 22 piercing through the first closure 9 adjacent to each other and opposite the first rim 16 of the first closure 9. The first electric connection element 7 projects through the first through-opening 21 pointing away from the casing body 4. The second electric connection element 8 projects through the second through-opening 22 pointing away from the casing body 4.

The build-up of the heating unit 4 shown in Fig. 1 and Fig. 2 is exemplary. In alternative embodiments it can be built differently without deviating from the scope of the invention. According to the inventive idea the heating unit 4 possesses at least one closure 9, 10 which is made of a heat-shrinkable plastic material.

Fig. 3 shows a detailed illustration of the first closure 9 according to Fig. 1 and Fig. 2. The first closure 9 comprises a substantially cap-shaped first base body 14 having a first rim 16 and two through-openings 21, 22 opposite the first rim 16.

The first through-opening 21 comprises a first collar 23 and the second through-opening 22 comprises a second collar 24. The first collar 23 and the second collar 24 are formed as beaker-shaped protuberances from the heat-shrinkable plastic material. The first electric connection element, which is not shown in Fig. 3, projects through the first collar 23 and the second electric connection element, which is not shown in Fig. 3, projects through the second collar 24 in the assembled state of the heating unit shown in Fig. 2.

The first collar 23 comprises a first side wall 25 having an outer surface and an inner surface. The inner surface of the first side wall 25 of the first collar 23 bears fluid-tightly against a portion of the first electric element in the assembled state of the heating unit shown in Fig. 2. The second collar 24 comprises a second side wall 26 having an outer surface and an inner surface. The inner surface of the second side wall 26 of the second collar 24 bears fluid-tightly against a portion of the second electric element in the assembled state of the heating unit shown in Fig. 2.

Fig. 4 shows a detailed illustration of the second closure 10 according to Fig. 1 and Fig. 2. The second closure 10 comprises a substantially cap-shaped second base body 15 having a second rim 17.

While the invention has been shown in Figures 1 to 4 in a preferred embodiment, it will be clear to those skilled in the arts to which it pertains that a variety of modifications and changes can be made thereto without departing from the scope of the invention.

## Claims

1. Electric heater (1), in particular for a heating or an air-conditioning system of a motor vehicle, comprising a heater core (2) having a plurality of heating units (3), said heating units (3) having a casing body (4) and at least one electric heating element arranged therein, wherein the casing body (4) comprises an open first end (5) and an open or closed second end (6) opposite the first end (5), wherein at least one electric connection element (7, 8), particularly for electrically contacting the at least one heating element, is arranged at the first end (5) and/or the second end (6) of the casing body (4), wherein the first end (5) comprises a first closure (9) for fluid-tightly closing the first end (5) and/or the second end (6) comprises a second closure (10) for fluid-tightly closing the second end (6), **characterised in that** the first closure (9) and/or the second closure (10) is/are made of a heat-shrinkable plastic material.

2. Electric heater (1) according to claim 1, **characterised in that** the first closure (9) comprises a substantially cap-shaped first base body (14) having a first rim (16) and/or the second closure (10) comprises a substantially cap-shaped second base body (15) having a second rim (17), wherein the first rim (16) encompasses the first end (5) of the casing body (4) and the second rim (17) encompasses the second end (6) of the casing body (4).

3. Electric heater (1) according to claim 2, **characterised in that** the first base body (14) of the first closure (9) comprises a first inner surface and/or the second base body (15) of the second closure (10) comprises a second inner surface, wherein at least one portion of the first inner surface fluid-tightly bears against the first end (5) of the casing body (4) and/or at least one portion of the second inner surface fluid-tightly bears against the second end (6) of the casing body (4).

4. Electric heater (1) according to claim 1, 2 or 3, **characterised in that** a first electric connection element (7) and a second electric connection element (8) project through the first closure (9) or the first electric connection element (7) projects through the first closure (9) and the second electric connection element (8) projects through the second closure (10).

5. Electric heater (1) according to claim 2, 3 or 4, **characterised in that** the first base body (14) of the first closure (9) comprises at least one through-opening (21, 22) opposite the first rim (16), wherein the at least one electric connection element (7, 8) projects through the at least one through-opening (21, 22).

6. Electric heater (1) according to claim 2, 3, 4 or 5, **characterised in that** the base body (14) of the first closure (9) comprises a first through-opening (21, 22) opposite the first rim (16) and the base body of the second closure (10) comprises a second through-opening opposite the second rim, wherein the first electric connection element (7) projects through the first through-opening (21) and the second electric connection element (8) projects through the second through-opening (22).

7. Electric heater (1) according to claim 1, 2, 3, 4 or 5, **characterised in that** the second closure comprises no through-opening.

8. Electric heater (1) according to claim 5 or 7, **characterised in that** the first base body (14) of the first closure (9) comprises a first through-opening (21) and a second through-opening (22), wherein the first electric connection element (7) projects through the first through-opening (21) and the second electric connection element (8) projects through the second through-opening (22).

9. Electric heater (1) according to claim 8, **characterised in that** the first through-opening (21) comprises a first collar (23) pointing away from the casing body (4) and the second through-opening (22) comprises a second collar (24) pointing away from the casing body (4), wherein the first electric connection element (7) projects through the first collar (23) and the second electric connection element (8) projects through the second collar (24).

10. Electric heater (1) according to claim 9, **characterised in that** the first collar (23) comprises a first inner surface and the second collar (24) comprises a second inner surface, wherein at least one portion of the first inner surface bears fluid-tightly against the first electric connection element (7) and at least one portion of the second inner surface bears fluid-tightly against the second electric connection element (8).

11. Electric heater (1) according to one of the previously claims, **characterised in that** at least one of the heating elements comprises PTC-elements.

12. Electric heater (1) according to one of the previously claims, **characterised in that** a plurality of heat dissipating fins is arranged between the casing bodies (4), wherein the heat dissipating fins form interstices, which can be flowed through in a flow direction F.

13. Electric heater (1) according to claim 12, **characterised in that** the casing bodies (4) respectively comprise a longitudinal axis A extending between the first end and (5) the second end (6) of the casing body (4), wherein the casing bodies (4) form at least one row (12) running perpendicular to the longitudinal axes A and the flow direction F.

14. Electric heater (1) according to one of the previously claims, **characterised in that** the first closures (9) of adjacent casing bodies (4) are connected to each other and form a first closure strip and/or the second closures (10) of adjacent casing bodies (4) are connected to each other and form a second closure strip.

15. Electric heater (1) according to one of the previously claims, **characterised in that** the first end (5) of the casing body (4) is friction fit in the first closure (9) by heating the first closure (9) and/or the second end (6) of the casing body (4) is friction fit in the second closure (10) by heating the second closure (10).
